# EUROPEAN PATENT APPLICATION

(11) **EP 1 185 129 A2**
(43) Date of publication of application: **06.03.2002**
(21) Application number: 01120078.9
(22) Date of filing: 21.08.2001
(51) Int. Cl.: H04Q 11/04, H04Q 11/00

(54) **Optical distribution network system that performs system switching only when total operation condition is improved**

(30) Priority: 04.09.2000 JP 2000267606; 15.12.2000 JP 2000382614
(71) Applicant: MITSUBISHI DENKI KABUSHIKI KAISHA, Tokyo 100-8310 (JP)
(72) Inventor: Kawate, Ryusuke, Chiyoda-ku, Tokyo 100-8310 (JP); Yoshida, Toshikazu, Chiyoda-ku, Tokyo 100-8310 (JP); Asashiba, Yoshihiro, Chiyoda-ku, Tokyo 100-8310 (JP); Iwasaki, Mitsuyoshi, Chiyoda-ku, Tokyo 100-8310 (JP); Ichibangase, Hiroshi, Chiyoda-ku, Tokyo 100-8310 (JP)
(74) Representative: Popp, Eugen, Dr.

(57) **Abstract**

An optical distribution network system includes an optical line termination (51) and a plurality of optical network units (52). The optical line termination monitors a system switching request transmitted from each of the optical network units, and controls the switching between the working side and the standby side system of the optical network unit. It can solve a problem of a conventional system in that if the working side an optical network unit (2-1) fails, and when its standby side is normal, even if the standby side of the other optical network units (2-2 - 2-n) has a failure, they are switched from the working side to the standby side, thereby worsening the total system operation.

## Description

### BACKGROUND OF THE INVENTION

### Field of the Invention

The present invention relates to an optical distribution network system that controls a duplex passive optical network (PON) section.

### Description of Related Art

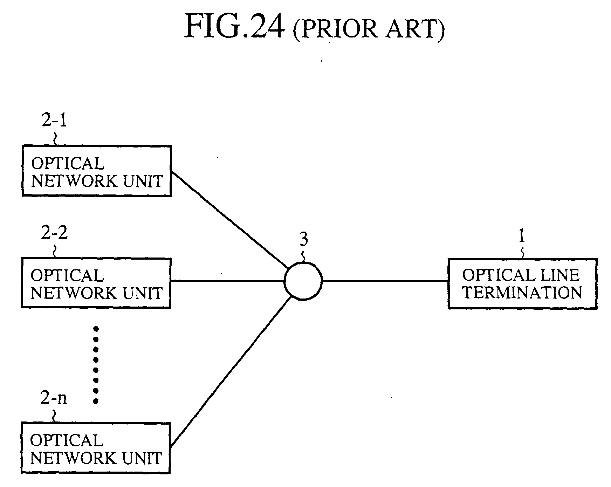

A conventional optical distribution network system is know which comprises an optical line termination and a plurality of optical network units connected to the optical line termination through optical fibers. Fig. 24 is a block diagram showing a schematic diagram of such a system, that is, a conventional optical distribution network system defined in ITU-T (International Telecommunication Union-Telecommunication) Recommendation G.983.1.

In the ITU-T Recommendation G.983.1, a downstream optical signal from an optical line termination 1 is split and broadcast to optical network units 2-1 - 2-n via an optical splitter 3. On the other hand, upstream signals from the optical network units 2-1 - 2-n are multiplexed by the optical splitter 3 to be transmitted to the optical line termination 1. To multiplex the upstream signals from the optical network units 2-1 - 2-n on the optical splitter 3, access control (delay control) is carried out. The delay control is also described in the ITU-T Recommendation G.983.1.

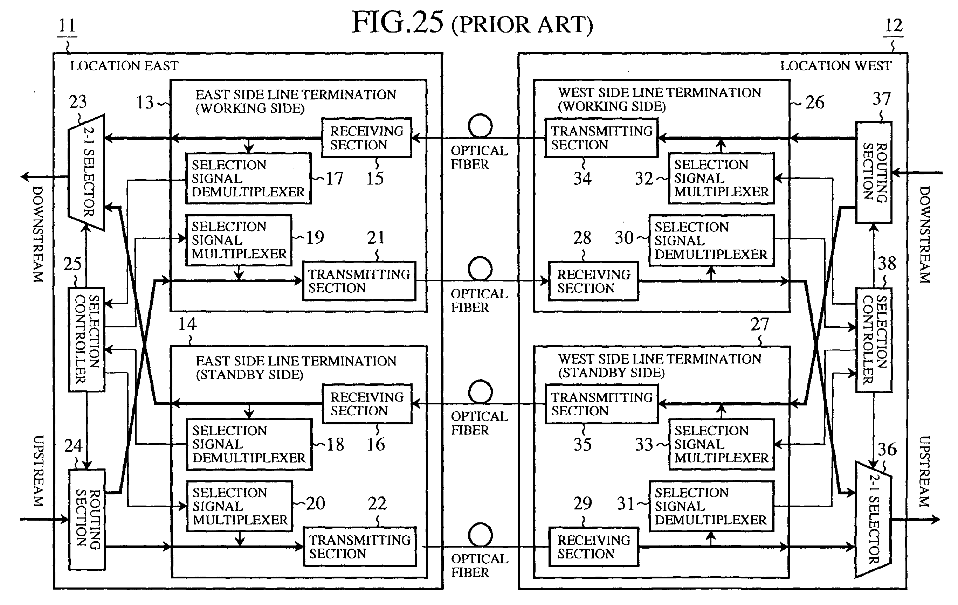

In addition, ITU-T Recommendations I.630 and G.783 define a redundant optical network system with a complete duplex configuration between a location EAST and a location WEST as shown in Fig. 25.

In Fig. 25, the reference numeral 11 designates a location EAST; 12 designates a location WEST; 13 designates an east side line termination on a working side; 14 designates an east side line termination on a standby side; reference numerals 15 and 16 each designate a receiving section for receiving the traffic (main signal) and a selection signal transmitted from the location WEST 12; 17 and 18 each designate a selection signal demultiplexer for extracting the selection signal received by the receiving section 15 or 16, and supply the selection signal to a selection controller 25; 19 and 20 each designate a selection signal multiplexer for capturing a selection signal output from the selection controller 25 and supplies it to a transmitting section 21 or 22; and 21 and 22 each designate a transmitting section for transmitting the traffic and selection signal to the location WEST 12.

The reference numeral 23 designates a 2-1 selector for selecting and outputting the traffic received by the working side east side line termination 13 or by the standby side east side line termination 14 under the control of the selection controller 25; 24 designates a routing section for supplying the traffic to at least one of the working side east side line termination 13 and the standby side east side line termination 14 under the control of the selection controller 25; and 25 designates the selection controller for controlling the 2-1 selector 23 and routing section 24 in response to the selection signal.

The reference numeral 26 designates a working side west side line termination; 27 designates a standby side west side line termination; reference numerals 28 and 29 each designate a receiving section for receiving the traffic and a selection signal transmitted from the location EAST 11; 30 and 31 each designate a selection signal demultiplexer for extracting the selection signal received by the receiving section 28 or 29, and supplies the selection signal to a selection controller 38; 32 and 33 each designate a selection signal multiplexer for supplying a selection signal output from the selection controller 38 to the transmitting section 34 or 35; and 34 and 35 each designate the transmitting section for transmitting the traffic and selection signal to the location EAST 11.

The reference numeral 36 designates a 2-1 selector for selecting and outputting the traffic received by the working side west side line termination 26 or by the standby side west side line termination 27 under the control of the selection controller 38; 37 designates a routing section for supplying the traffic to at least one of the working side west side line termination 26 and the standby side west side line termination 27 under the control of the selection controller 38; and 38 designates the selection controller for controlling the 2-1 selector 36 and routing section 37 in response to the selection signal.

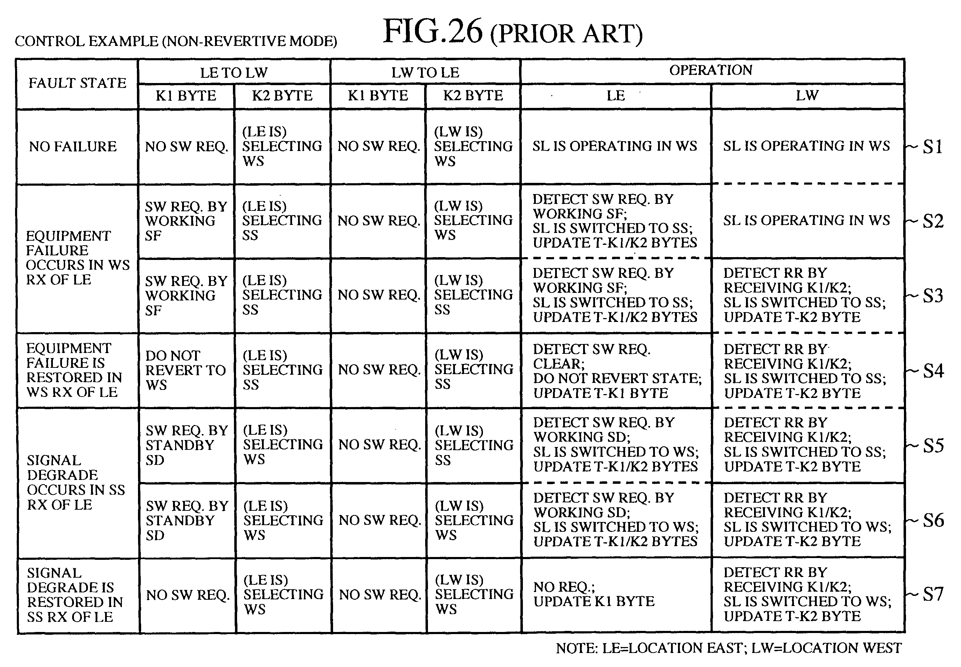

Fig. 26 is a table describing a control example when detecting an equipment failure at the location EAST 11. The protocol of Fig. 26 is based on the ITU-T Recommendation I.630.

Next, the operation of the conventional system will be described.

Here, the operation will be described taking an example where the location EAST 11 has a failure. It is assumed here that when the location EAST 11 operates normally, the 2-1 selector 23 and routing section 24 select the working side east side line termination 13, and the 2-1 selector 36 and routing section 37 select the working side west side line termination 26. Accordingly, the traffic is transmitted and received through the working side.

First, when the location EAST 11 has no failure (S1), the selection controller 25 of the location EAST 11 supplies the working side and standby side selection signal multiplexers 19 and 20 with a selection signal consisting of a K1 byte indicating "No switching request" and a K2 byte indicating "Selecting working side".

The selection signal is transmitted to the location WEST 12 by the transmitting sections 21 and 22 in the location EAST 11, and is received by the receiving sections 28 and 29 in the location WEST 12. Then, the selection signal demultiplexers 30 and 31 supply the selection signal to the selection controller 38.

Receiving the selection signal from the selection signal demultiplexers 30 and 31, the selection controller 38 in the location WEST 12 controls the 2-1 selector 36 and routing section 37 in response to the selection signal.

Since the K1 byte indicates "No switching request", the selection controller 38 maintains the selection state of the 2-1 selector 36 and routing section 37, that is, maintains the selection of the working side.

Incidentally, in the same manner as the location EAST 11, the location WEST 12 also transmits the selection signal consisting of the K1 byte and K2 byte to the location EAST 11. However, since it is assumed that the location WEST 12 always operates normally in the example, it continues to transmit the K1 byte indicating "No switching request".

Next, if an equipment failure happens in the working side receiving section 15 in the location EAST 11 (S2 and S3), the selection controller 25 of the location EAST 11 outputs a command to switch the 2-1 selector 23 and routing section 24 to the standby side.

In addition, the selection controller 25 of the location EAST 11 supplies the working side and standby side selection signal multiplexers 19 and 20 with the selection signal consisting of the K1 byte indicating "Switching request due to SF (signal fail) on a working side" and the K2 byte indicating "Selecting standby side".

The selection signal is transmitted to the location WEST 12 by the transmitting sections 21 and 22 in the location EAST 11, and is received by the receiving sections 28 and 29 in the location WEST 12. Then the selection signal demultiplexers 30 and 31 supply the selection signal to the selection controller 38.

Receiving the selection signal from the selection signal demultiplexers 30 and 31, the selection controller 38 in the location WEST 12 controls the 2-1 selector 36 and routing section 37 in response to the selection signal.

Since the K1 byte indicates "Switching request due to SF (signal fail) on a working side" and the K2 byte indicates "Selecting standby side", the selection controller 38 outputs a command to switch the 2-1 selector 36 and routing section 37 to the standby side. Subsequently, the traffic is transmitted and received via the standby side.

The location WEST 12, which cannot detect the equipment failure of the location EAST 11 at stage S2, transmits the K2 byte indicating "Selecting working side" at the stage S2. However, at stage S3, since it detects the equipment failure of the location EAST 11, it transmits the K2 byte indicating "Selecting standby side".

Next, when the equipment failure is restored in the working side receiving section 15 in the location EAST 11 (S4), the selection controller 25 of the location EAST 11 maintains the selection state of the 2-1 selector 23 and routing section 24, that is, the selection of the standby side.

In addition, the selection controller 25 of the location EAST 11 supplies the working side and standby side selection signal multiplexers 19 and 20 with the selection signal consisting of the K1 byte indicating "Do not revert to working side" and the K2 byte indicating "Selecting standby side".

The selection signal is transmitted to the location WEST 12 by the transmitting sections 21 and 22 in the location EAST 11, and is received by the receiving sections 28 and 29 in the location WEST 12. Then, the selection signal demultiplexers 30 and 31 supply the selection signal to the selection controller 38.

Receiving the selection signal from the selection signal demultiplexers 30 and 31, the selection controller 38 in the location WEST 12 controls the 2-1 selector 36 and routing section 37 in response to the selection signal.

Since the K1 byte indicates "Do not revert to working side" in this case, the selection controller 38 maintains the selection state of the 2-1 selector 36 and routing section 37, that is, the selection of the standby side.

Next, if a signal degrade occurs in the standby side receiving section 16 in the location EAST 11 (S5 and S6), the selection controller 25 of the location EAST 11 outputs a command to switch the 2-1 selector 23 and routing section 24 to the working side.

In addition, the selection controller 25 of the location EAST 11 supplies the working side and standby side selection signal multiplexers 19 and 20 with the selection signal consisting of K1 byte indicating "Switching request due to SD (signal degrade) of standby side" and the K2 byte indicating "Selecting working side".

The selection signal is transmitted to the location WEST 12 by the transmitting sections 21 and 22 in the location EAST 11, and is received by the receiving sections 28 and 29 in the location WEST 12. Then, the selection signal demultiplexers 30 and 31 supply the selection signal to the selection controller 38.

Receiving the selection signal from the selection signal demultiplexers 30 and 31, the selection controller 38 in the location WEST 12 controls the 2-1 selector 36 and routing section 37 in response to the selection signal.

Since the K1 byte indicates "Switching request due to SD (signal degrade) of standby side" and the K2 byte indicates "Selecting working side", the selection controller 38 outputs a command to switch the 2-1 selector 36 and routing section 37 to the working side. Subsequently, the traffic is transmitted and received via the working side.

The location WEST 12, which cannot detect the signal degrade in the location EAST 11 at stage S5, transmits the K2 byte indicating "Selecting standby side" at stage S5. However, at stage S6, since it detects the signal degrade of the location EAST 11, it transmits the K2 byte indicating "Selecting working side".

Next, when the signal degrade is restored in the standby side receiving section 16 in the location EAST 11 (S7), the selection controller 25 of the location EAST 11 maintains the selection state of the 2-1 selector 23 and routing section 24, that is, the selection of the working side.

In addition, the selection controller 25 of the location EAST 11 supplies the working side and standby side selection signal multiplexers 19 and 20 with the selection signal consisting of the K1 byte indicating "No switching request" and the K2 byte indicating "Selecting working side".

The selection signal is transmitted to the location WEST 12 by the transmitting sections 21 and 22 in the location EAST 11, and is received by the receiving sections 28 and 29 in the location WEST 12. Then, the selection signal demultiplexers 30 and 31 supply the selection signal to the selection controller 38.

Receiving the selection signal from the selection signal demultiplexers 30 and 31, the selection controller 38 in the location WEST 12 controls the 2-1 selector 36 and routing section 37 in response to the selection signal.

Here, since the K1 byte indicates "No switching request", the selection controller 38 maintains the selection state of the 2-1 selector 36 and routing section 37, that is, the selection of the working side.

In the conventional optical distribution network system with the foregoing configuration, the location EAST 11 carries out the switching control to the standby side by itself if it detects the equipment failure of the working side. Accordingly, when the network system has a tree configuration, in which a plurality of locations EAST 11 are connected to the location WEST 12, the following problem can arise (as for the tree configuration, see Fig. 24, in which the optical network units 2-1 - 2-n each correspond to the location EAST 11, and the optical line termination 1 correspond to the location WEST 12). For example, if the working side of the optical network unit 2-1 has a failure, and the standby side thereof is normal, it carries out the switching from the working side to the standby side, even if the standby sides of the other optical network units 2-2 - 2-n have a failure, thereby worsening the total system operation.

### SUMMARY OF THE INVENTION

The present invention is implemented to solve the foregoing problem. It is therefore an object of the present invention to provide an optical distribution network system capable of carrying out the switching control of the system only when the total system operation is improved.

According to a first aspect of the present invention, there is provided an optical distribution network system comprising: an optical line termination; a plurality of optical network units, each of which is connected to the optical line termination through at least one of a first optical network and a second optical network; monitoring means installed in the optical line termination for detecting a system switching request from each of the plurality of optical network units; and control means installed in the optical line termination for controlling system switching between a working side and a standby side of each of the plurality of optical network units.

Here, the control means may employ a tree switching method that carries out the system switching between the working side and the standby side of all of the plurality of optical network units at once, when carrying out the system switching of any one of the plurality of optical network units.

The control means may employ a branch switching method that carries out the system switching between the working side and the standby side of only one of the plurality of optical network units, when carrying out the system switching.

When the monitoring means detects a system switching request sent from at least one of the plurality of optical network units, the control means may make a decision as to whether to carry out the system switching considering failure conditions of all of the plurality of optical network units.

When carrying out the system switching of the working side of all of the plurality of optical network units to their standby side, the control means may perform switching control only when a number of failed units on the standby side is less than a number of failed units on the working side.

When carrying out the system switching of the standby side of all of the plurality of optical network units to their working side, the control means may perform switching control only when a number of failed units on the working side is less than a number of failed units on the standby side.

Each of the plurality of optical network units may further comprise switching means for carrying out the system switching between the working side and the standby side when it receives a system switching command from the optical line termination.

The control means may carry out the system switching only when a system switching request from one of the plurality of optical network units continues for more than a predetermined time period.

The control means may carry out its switching control in a duplex optical distribution network system on a passive optical network system.

The optical line termination may further comprise output selecting means for outputting one of upstream messages that are copied via the working side and the standby side by at least one of the plurality of optical network units, and at least one of the plurality of optical network units may further comprise output selecting means for outputting one of downstream messages that are copied via the working side and the standby side by the optical line termination.

At least one of the plurality of optical network units may comprise transmission stop means for halting transmission of one of the upstream messages to be copied to the working side and standby side of the optical line termination.

At least one of the plurality of optical network units may comprise a gate for preventing one of the messages to be copied from being copied by suppressing it.

The optical line termination may comprise a gate for preventing one of the messages to be copied from being copied by suppressing it.

The control means may prevent the message of the selected side from being output until a predetermined time has elapsed after the system switching.

### BRIEF DESCRIPTION OF THE DRAWINGS

Fig. 1 is a block diagram showing an entire configuration of an embodiment 1 of the optical distribution network system in accordance with the present invention;
Fig. 2 is a block diagram showing a detailed configuration of the embodiment 1 of the optical distribution network system in accordance with the present invention;
Fig. 3 is a table showing a first portion of a control example carried out when an equipment failure is detected in the optical network unit 52 (non-revertive mode);
Fig. 4 is a table showing a second portion of the control example carried out when the equipment failure is detected in the optical network unit 52 (non-revertive mode);
Fig. 5 is a diagram illustrating a sequence of system switching due to an equipment failure in the present embodiment 1;
Fig. 6 is a diagram illustrating a sequence of system switching due to an equipment failure in a conventional example;
Fig. 7 is a table showing a control example carried out when an equipment failure is detected in the optical network unit 52 (revertive mode);
Fig. 8 is a diagram illustrating a sequence of system switching due to an equipment failure in an embodiment 2;
Fig. 9 is a table showing a first portion of a control example carried out when an equipment failure is detected in the optical network unit 52 (non-revertive mode);
Fig. 10 is a table showing a second portion of the control example carried out when the equipment failure is detected in the optical network unit 52 (non-revertive mode);
Fig. 11 is a table showing a first portion of a control example carried out when an equipment failure is detected in the optical network unit 52 (revertive mode);
Fig. 12 is a table showing a second portion of the control example carried out when the equipment failure is detected in the optical network unit 52 (revertive mode);
Fig. 13 is a table showing a first portion of a control example carried out when an equipment failure is detected in the optical network unit 52 (non-revertive mode);
Fig. 14 is a table showing a second portion of the control example carried out when the equipment failure is detected in the optical network unit 52 (non-revertive mode);
Fig. 15 is a table showing a first portion of a control example carried out when an equipment failure is detected in the optical network unit 52 (revertive mode);
Fig. 16 is a table showing a second portion of the control example carried out when the equipment failure is detected in the optical network unit 52 (revertive mode);
Fig. 17 is a table showing a first portion of a control example carried out when an equipment failure is detected in the optical network unit 52 (non-revertive mode);
Fig. 18 is a table showing a second portion of the control example carried out when the equipment failure is detected in the optical network unit 52 (non-revertive mode);
Fig. 19 is a table showing a first portion of a control example carried out when an equipment failure is detected in the optical network unit 52 (revertive mode);
Fig. 20 is a table showing a second portion of the control example carried out when the equipment failure is detected in the optical network unit 52 (revertive mode);
Fig. 21 is a block diagram showing a detailed configuration of an embodiment 6 of the optical distribution network system in accordance with the present invention;
Fig. 22 is a block diagram showing a detailed configuration of an embodiment 7 of the optical distribution network system in accordance with the present invention;
Fig. 23 is a block diagram showing a detailed configuration of an embodiment 8 of the optical distribution network system in accordance with the present invention;
Fig. 24 is a block diagram showing a schematic configuration of a conventional optical network system in which a single optical line termination is connected with a plurality of optical network units through optical fibers;
Fig. 25 is a block diagram showing a configuration of a conventional redundant optical network system with a complete duplex configuration between a location EAST and location WEST; and
Fig. 26 is a table showing a control example carried out when an equipment failure is detected in a conventional location EAST 11.

### DETAILED DESCRIPTION OF THE PREFERRED EMBODIMENTS

The invention will now be described with reference to the accompanying drawings.

### EMBODIMENT 1

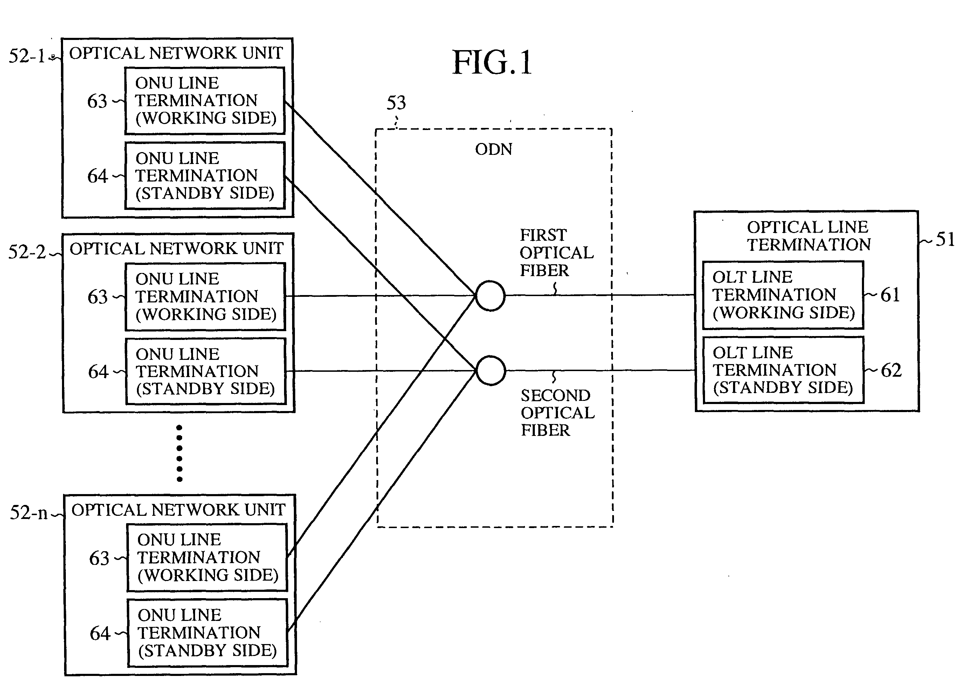

Fig. 1 is a block diagram showing an entire configuration of an embodiment 1 of the optical distribution network system in accordance with the present invention. In this figure, the reference numeral 51 designates an optical line termination (OLT); reference numerals 52-1 - 52-n each designate an optical network unit (ONU); the reference numeral 53 designate an ODN (Optical Distribution Network) consisting of optical couplers and the like; 61 designates a working side line termination section of the OLT; 62 designates a standby side line termination section of the OLT; 63 designates a working side line termination section of the ONU and 64 designates a standby side line termination section of the ONU.

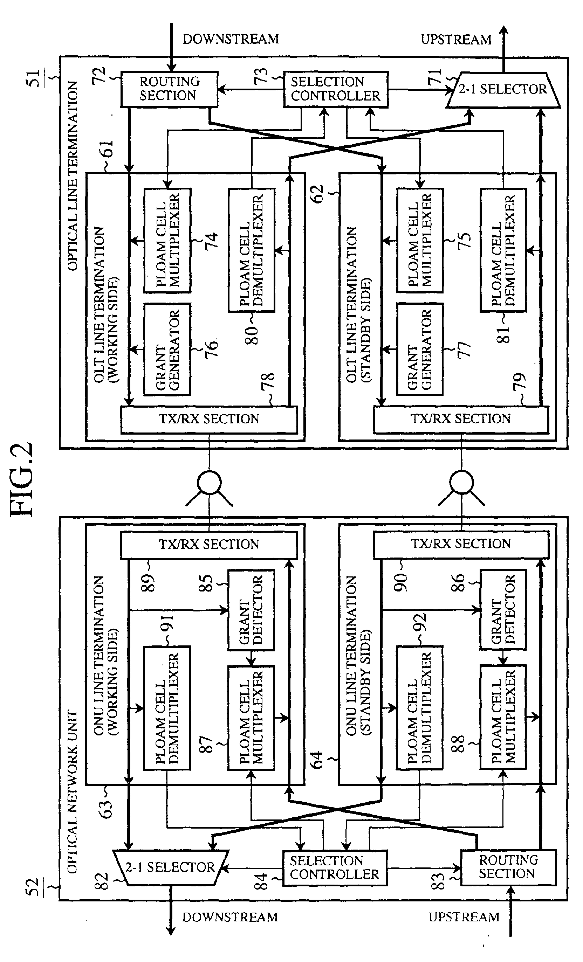

Fig. 2 is a block diagram showing a detailed configuration of the embodiment 1 of the optical distribution network system in accordance with the present invention. In this figure, the reference numeral 52 designates one of the optical network units 52-1 - 52-n; 71 designates a 2-1 selector for selecting and outputting either the traffic received by the working side line termination section of the OLT 61 or the traffic received by the standby side line termination section of the OLT 62 under the control of a selection controller 73; 72 designates a routing section for supplying the traffic to at least one of the working side line termination section of the OLT 61 and the standby side line termination section of the OLT 62 under the control of the selection controller 73; and 73 designates the selection controller for controlling the 2-1 selector 71 and routing section 72 in response to the K1/K2 byte included in a PST (PON Section Trace) message, one of the PLOAM (Physical Layer Operations and Maintenance) cells.

Reference numerals 74 and 75 each designate a PLOAM cell multiplexer for supplying a PST message, one of PLOAM cells, which is output from the selection controller 73, to a transmitting/receiving (TX/RX) section 78 or 79; 76 and 77 each designate a grant generator for generating a PLOAM grant for carrying out delay control, and for supplying the PLOAM grant to the TX/RX section 78 or 79; 78 and 79 each designate the TX/RX section for transmitting the traffic, PLOAM cells and PLOAM grants to the optical network unit 52, and for receiving the traffic and PLOAM cells from the optical network unit 52; and 80 and 81 each designate a PLOAM cell demultiplexer for extracting the PLOAM cells received by the TX/RX section 78 or 79, and for supplying the PST message, one of PLOAM cells, to the selection controller 73.

The reference numeral 82 designates a 2-1 selector for selecting and outputting the traffic received by the working side line termination section of the ONU 63 or by the standby side line termination section of the ONU 64 under the control of a selection controller 84; 83 designates a routing section for supplying the traffic to at least one of the working side line termination section of the ONU 63 and standby side line termination section of the ONU 64 under the control of the selection controller 84; and 84 designates the selection controller for controlling the 2-1 selector 82 and routing section 83 in response to a PST message, one of PLOAM cells.

Reference numeral 85 and 86 each designate a grand detector for detecting a PLOAM grant received by a TX/RX section 89 or 90; 87 and 88 each designate a PLOAM cell multiplexer for supplying the TX/RX section 89 or 90 with a PLOAM cell including the PST message output from the selection controller 84 at the timing indicated by the PLOAM grant detected by the grand detector 85 or 86; 89 and 90 each designate the TX/RX section for transmitting the traffic and PLOAM cells to the optical line termination 51, and for receiving the traffic, PLOAM cells and PLOAM grants from the optical line termination 51; and 91 and 92 each designate a PLOAM cell demultiplexer for extracting the traffic received by the TX/RX section 89 or 90, and for supplying the PST message, one of PLOAM cells, to the selection controller 84.

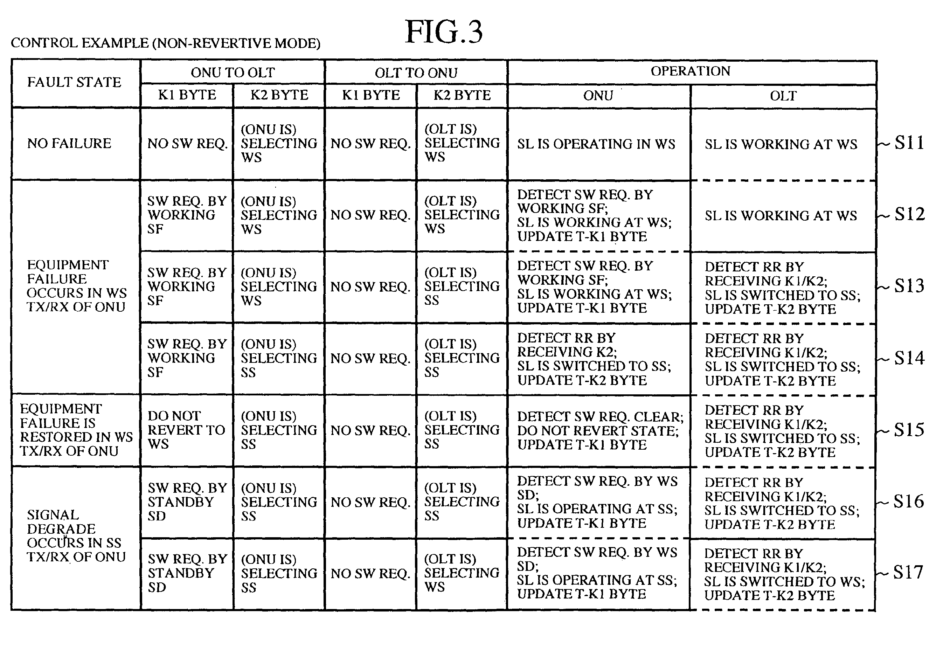

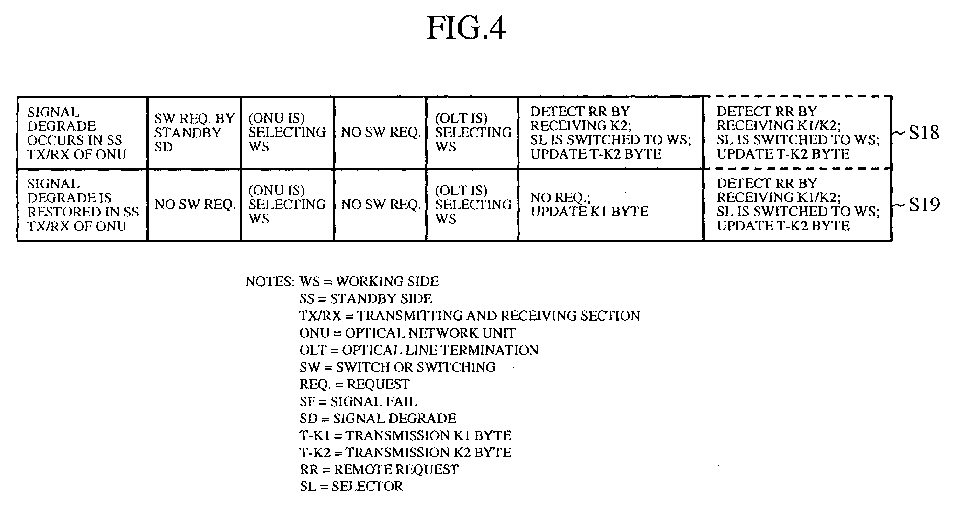

Next, the operation of the present embodiment 1 will be described with reference to Figs. 3 and 4 illustrating a control example carried out when an equipment failure is detected (non-revertive mode) in the optical network unit 52.

The operation will be described taking an example where a failure happens in the optical network unit 52. It is assumed that when the optical network unit 52 is normal, the 2-1 selector 82 and routing section 83 select the traffic from the working side line termination section of the ONU 63, and the 2-1 selector 71 and routing section 72 select the traffic from the working side line termination section of the OLT 61. Accordingly, the traffic is transmitted and received through the working side.

First, when the optical network unit 52 is normal (S11), the selection controller 84 of the optical network unit 52 supplies the working side and standby side PLOAM cell multiplexers 87 and 88 with a PST message consisting of a K1 byte indicating "No switching request" and a K2 byte indicating "Selecting working side".

The PLOAM cell including the PST message is transmitted to the optical line termination 51 by the TX/RX sections 89 and 90 of the optical network unit 52, and is received by the TX/RX sections 78 and 79 of the optical line termination 51. Then, the PLOAM cell demultiplexer 80 and 81 supply the PST message contained in the PLOAM cell to the selection controller 73.

Receiving the PST message from the PLOAM cell demultiplexers 80 and 81, the selection controller 73 of the optical line termination 51 controls the 2-1 selector 71 and routing section 72 in response to the PST message.

Here, since the K1 byte indicates "No switching request", the selection controller 73 maintains the selection state of the 2-1 selector 71 and routing section 72, that is, maintains the selection of the working side.

Although the optical line termination 51 also transmits a PST message consisting of the K1 byte and K2 byte to the optical network unit 52 just as the optical network unit 52, since the optical line termination 51 is assumed to be always normal, it continues to transmit the K1 byte indicating "No switching request".

Next, if an equipment failure happens in the working side TX/RX section 89 in the optical network unit 52 (stages S12, S13 and S14), the selection controller 84 of the optical network unit 52 supplies the working side and standby side PLOAM cell multiplexers 87 and 88 with the PST message consisting of the K1 byte indicating "Switching request due to SF (signal fail) on a working side" and the K2 byte indicating "Selecting working side".

The PLOAM cell including the PST message is transmitted to the optical line termination 51 by the TX/RX sections 89 and 90 of the optical network unit 52, and is received by the TX/RX sections 78 and 79 of the optical line termination 51. Then, the PLOAM cell demultiplexers 80 and 81 supply the PST message contained in the PLOAM cell to the selection controller 73.

Receiving the PST message from the PLOAM cell demultiplexers 80 and 81, the selection controller 73 of the optical line termination 51 controls the 2-1 selector 71 and routing section 72 in response to the PST message.

Here, since the K1 byte indicates "Switching request due to SF (signal fail) on a working side", the selection controller 73 outputs a command to switch the 2-1 selector 71 and routing section 72 to the standby side.

The optical line termination 51 transmits the K2 byte indicating "Selecting working side" at stage S12 because it cannot detect the equipment failure of the optical network unit 52. In contrast, it transmits the K2 byte indicating "Selecting standby side" at stage S13 because it detects the equipment failure of the optical network unit 52.

However, when employing the tree switching method that switches all the optical network units 52-1 - 52-n connected to the optical line termination 51 at once from the working side to the standby side, the optical line termination 51 decides whether to carry out the system switching control considering the fail state of all the optical network units 52-1 - 52-n (decides whether to update the K2 byte or not).

For example, the system switching control is allowed only when the number of failed units on the standby side is less than the number of failed units on the working side among all the optical network units 52-1 - 52-n.

In contrast, when employing, rather than the tree switching method, the branch switching method that can carry out the switching for each optical network unit independently, and hence can connect each optical network unit to a desired side, only the system of the failed optical network unit 52 is switched, with leaving the systems of the other optical network units as they are.

In addition, the selection controller 73 of the optical line termination 51 supplies the working side and standby side PLOAM cell multiplexers 74 and 75 with the PST message consisting of the K1 byte indicating "No switching request" and the K2 byte indicating "Selecting standby side" at stage S13.

The PLOAM cell including the PST message is transmitted to the optical network unit 52 by the TX/RX sections 78 and 79 of the optical line termination 51, and is received by the TX/RX sections 89 and 90 of the optical network unit 52. Then, the PLOAM cell demultiplexers 91 and 92 supply the PST message contained in the PLOAM cell to the selection controller 84.

Receiving the PST message from the PLOAM cell demultiplexers 91 and 92, the selection controller 84 of the optical network unit 52 controls the 2-1 selector 82 and routing section 83 in response to the PST message at stage S14.

Here, since the K2 byte indicates "Selecting standby side", the selection controller 84 outputs a command to switch the 2-1 selector 82 and routing section 83 to the standby side. Subsequently, the traffic is transmitted and received via the standby side.

Next, when the equipment failure is restored in the working side TX/RX section 89 in the optical network unit 52 (S15), the selection controller 84 of the optical network unit 52 supplies the working side and standby side PLOAM cell multiplexers 87 and 88 with the PST message consisting of the K1 byte indicating "Do not revert to working side" or "No switching request" and the K2 byte indicating "Selecting standby side".

The PLOAM cell including the PST message is transmitted to the optical line termination 51 by the TX/RX sections 89 and 90 of the optical network unit 52, and is received by the TX/RX sections 78 and 79 of the optical line termination 51. Then, the PLOAM cell demultiplexers 80 and 81 supply the PST message contained in the PLOAM cell to the selection controller 73.

Receiving the PST message from the PLOAM cell demultiplexers 80 and 81, the selection controller 73 of the optical line termination 51 controls the 2-1 selector 71 and routing section 72 in response to the PST message.

Here, since the K1 byte indicates "Do not revert to working side" or "No switching request", the optical line termination 51 maintains the selection state of the 2-1 selector 71 and routing section 72, that is, maintains the selection of the standby side.

Next, if a signal degrade occurs in the standby side TX/RX section 90 in the optical network unit 52 (stages S16, S17 and S18), the selection controller 84 of the optical network unit 52 supplies the working side and standby side PLOAM cell multiplexers 87 and 88 with the PST message consisting of the K1 byte indicating "Switching request due to SD (signal degrade) on a standby side" and the K2 byte indicating "Selecting standby side".

The PLOAM cell including the PST message is transmitted to the optical line termination 51 by the TX/RX sections 89 and 90 of the optical network unit 52, and is received by the TX/RX sections 78 and 79 of the optical line termination 51. Then, the PLOAM cell demultiplexers 80 and 81 supply the PST message contained in the PLOAM cell to the selection controller 73.

Receiving the PST message from the PLOAM cell demultiplexers 80 and 81, the selection controller 73 of the optical line termination 51 controls the 2-1 selector 71 and routing section 72 in response to the PST message.

Here, since the K1 byte indicates "Switching request due to SD (signal degrade) on a standby side", the selection controller 73 outputs a command to switch the 2-1 selector 71 and routing section 72 to the working side.

In this case, since the optical line termination 51 cannot detect the signal degrade of the optical network unit 52 at stage S16, it transmits the K2 byte indicating "Selecting standby side" at this stage. In contrast, at stage S17, it transmits the K2 byte indicating "Selecting working side" because it detects the signal degrade of the optical network unit 52 at this stage.

However, when employing the tree switching method that switches all the optical network units 52-1 - 52-n connected to the optical line termination 51 at once from the standby side to the working side, the optical line termination 51 decides whether to carry out the system switching control considering the fail state of all the optical network units 52-1 - 52-n (decides whether to update the K2 byte or not).

For example, the system switching control is allowed only when the number of failed units on the working side is less than the number of failed units on the standby side among all the optical network units 52-1 - 52-n.

In contrast, when employing the branch switching method rather than the tree switching method, only the system of the failed optical network unit 52 is switched, with leaving the systems of the other optical network units as they are.

At stage S17, the selection controller 73 of the optical line termination 51 supplies the working side and standby side PLOAM cell multiplexers 74 and 75 with the PST message consisting of the K1 byte indicating "No switching request" and the K2 byte indicating "Selecting working side" as described above.

The PLOAM cell including the PST message is transmitted to the optical network unit 52 by the TX/RX sections 78 and 79 of the optical line termination 51, and is received by the TX/RX sections 89 and 90 of the optical network unit 52. Then, the PLOAM cell demultiplexers 91 and 92 supply the PST message contained in the PLOAM cell to the selection controller 84.

Receiving the PST message from the PLOAM cell demultiplexers 91 and 92, the selection controller 84 of the optical network unit 52 controls the 2-1 selector 82 and routing section 83 in response to the PST message at stage S18.

Here, since the K2 byte indicates "Selecting working side", the selection controller 84 outputs a command to switch the 2-1 selector 82 and routing section 83 to the working side. Subsequently, the traffic is transmitted and received via the working side.

Next, when the signal degrade is restored in the standby side TX/RX section 90 in the optical network unit 52 (S19), the selection controller 84 of the optical network unit 52 supplies the working side and standby side PLOAM cell multiplexers 87 and 88 with the PST message consisting of the K1 byte indicating "No switching request" and the K2 byte indicating "Selecting working side".

The PLOAM cell including the PST message is transmitted to the optical line termination 51 by the TX/RX sections 89 and 90 of the optical network unit 52, and is received by the TX/RX sections 78 and 79 of the optical line termination 51. Then, the PLOAM cell demultiplexers 80 and 81 supply the PST message contained in the PLOAM cell to the selection controller 73.

Receiving the PST message from the PLOAM cell demultiplexers 80 and 81, the selection controller 73 of the optical line termination 51 controls the 2-1 selector 71 and routing section 72 in response to the PST message.

Here, since the K1 byte indicates "No switching request", the optical line termination 51 maintains the selection state of the 2-1 selector 71 and routing section 72, that is, maintains the selection of the working side.

As described above, the present embodiment 1 is configured such that the optical line termination monitors the system switching request by the optical network unit, and controls the switching between the working side and the standby side system. As a result, the present embodiment 1 offers an advantage of being able to carry out the switching control of the system only when the total system operation is improved.

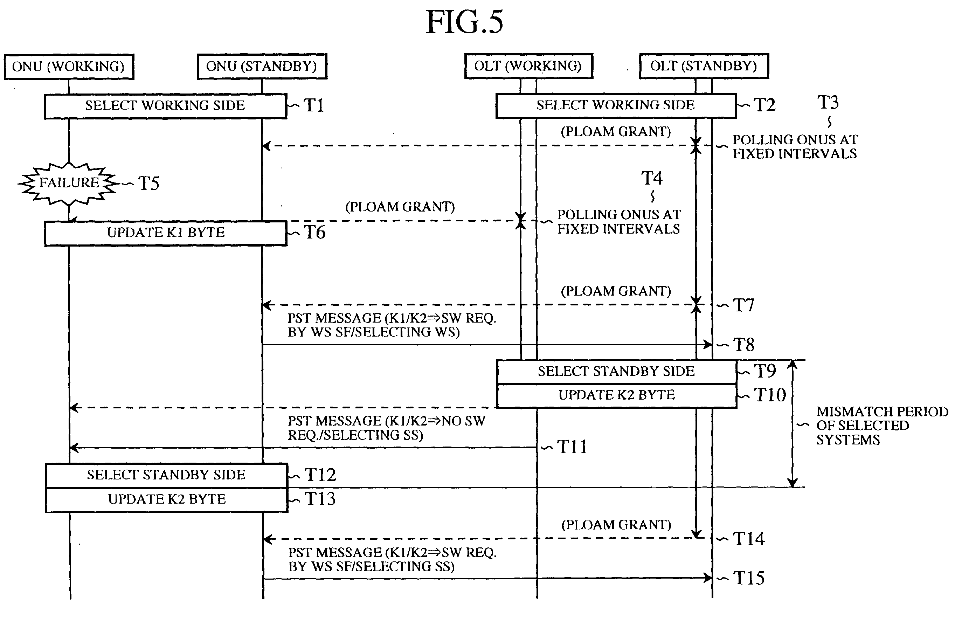

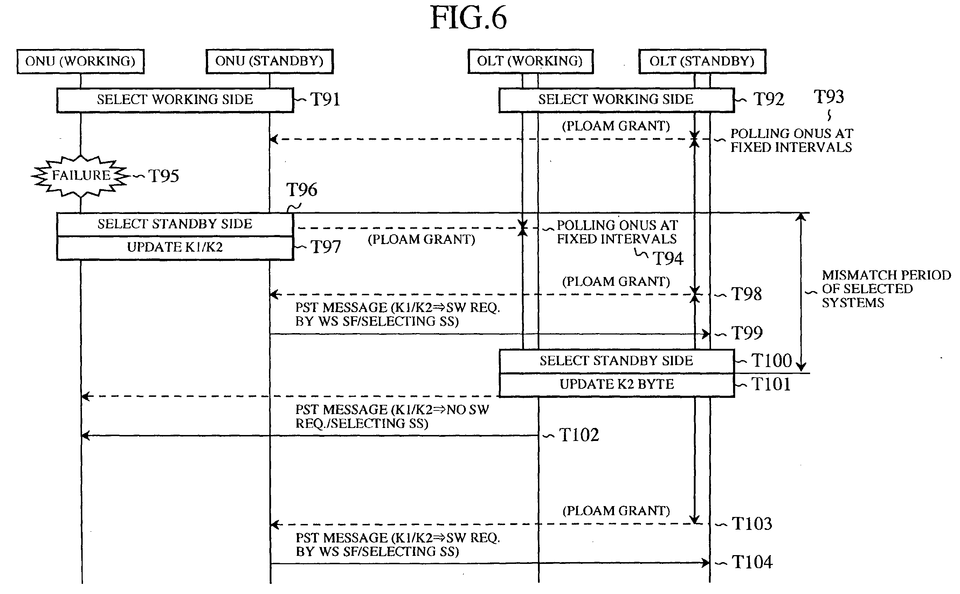

Fig. 5 is a sequence diagram illustrating a system switching due to an equipment failure in the present embodiment 1; and Fig. 6 is a sequence diagram illustrating a system switching due to an equipment failure in a conventional example.

As clearly seen from Fig. 5, if a failure happens in the optical network unit 52, the optical line termination 51 carries out the system switching first (see, T9), followed by the system switching by the optical network unit 52 (see, T12). Thus, a mismatch of selected systems occurs between the optical line termination 51 and the optical network unit 52 during the time period T9 - T12.

In contrast, if a failure happens in the optical network unit (corresponding to the location EAST 11) in the conventional example, the optical network unit carries out the system switching first (see, T96), and then transmits the PLOAM cell consisting of the K1 byte and K2 byte to the optical line termination (corresponding to the location WEST 12) at the timing indicated by the PLOAM grant, followed by the system switching by the optical line termination in response to the K1 byte and K2 byte (see, T100). Thus, a mismatch of selected systems occurs between the optical line termination and optical network unit during the time period T96 - T100.

Comparing the time period of the mismatch of the present embodiment 1 with that of the conventional example, the conventional example takes extra time by an amount of transmitting the PLOAM cell to the optical line termination at the timing indicated by the PLOAM grant.

### EMBODIMENT 2

Although the foregoing embodiment 1 handles the non-revertive mode that prevents the reversion back to the working side even when the equipment failure of the working side TX/RX section 89 is restored, it can also handle the revertive mode that requests the reversion back to the working side.

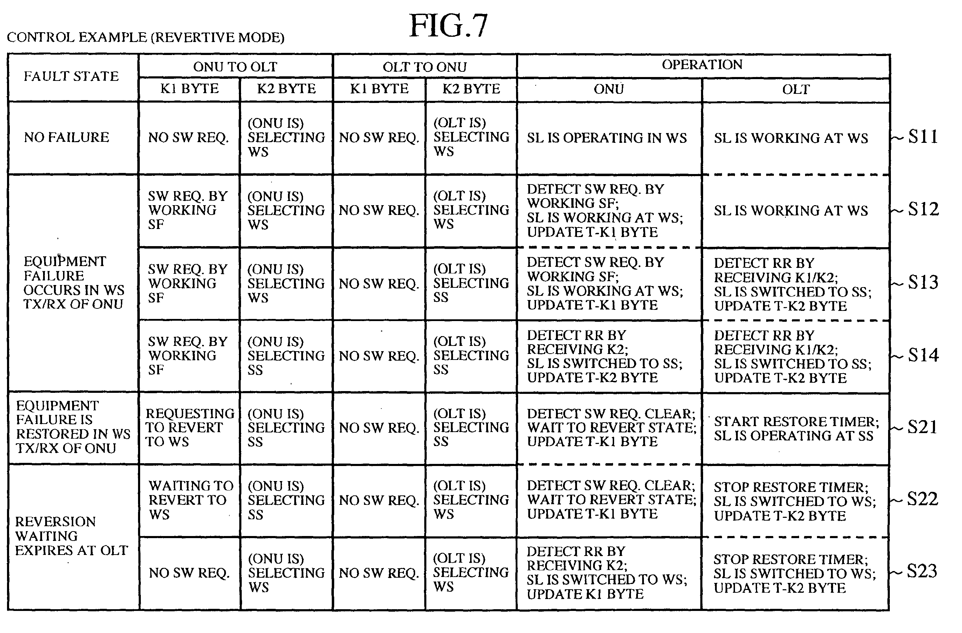

Fig. 7 is a table showing a control example carried out when an equipment failure is detected in the optical network unit 52 (revertive mode).

It will be described in more detail, except for the description of stages S11 - S14 because it is the same as that of Fig. 3.

When the equipment failure is restored in the working side TX/RX section 89 in the optical network unit 52 (S21), the selection controller 84 of the optical network unit 52 supplies the working side and standby side PLOAM cell multiplexers 87 and 88 with the PST message consisting of the K1 byte indicating "Request to revert back to working side" or "No switching request" and the K2 byte indicating "Selecting standby side".

The PLOAM cell including the PST message is transmitted to the optical line termination 51 by the TX/RX sections 89 and 90 of the optical network unit 52, and is received by the TX/RX sections 78 and 79 of the optical line termination 51. Then the PLOAM cell demultiplexers 80 and 81 supply the PST message contained in the PLOAM cell to the selection controller 73.

Receiving the PST message from the PLOAM cell demultiplexers 80 and 81, the selection controller 73 of the optical line termination 51 controls the 2-1 selector 71 and routing section 72 in response to the PST message.

Here, since the K1 byte indicates "Request to revert back to working side", the selection controller 73 starts a restore timer not shown, and maintains the selection state of the 2-1 selector 71 and routing section 72, that is, maintains the selection of the standby side at this stage.

When the restore timer expires, the stage S22 is entered, in which the selection controller 73 of the optical line termination 51 outputs a command to revert the 2-1 selector 71 and routing section 72 back to the working side.

In addition, the selection controller 73 of the optical line termination 51 supplies the working side and standby side PLOAM cell multiplexers 74 and 75 with the PST message consisting of the K1 byte indicating "No switching request" and the K2 byte indicating "Selecting working side".

The PLOAM cell including the PST message is transmitted to the optical network unit 52 by the TX/RX sections 78 and 79 of the optical line termination 51, and is received by the TX/RX sections 89 and 90 of the optical network unit 52. Then, the PLOAM cell demultiplexers 91 and 92 supply the PST message contained in the PLOAM cell to the selection controller 84.

Receiving the PST message from the PLOAM cell demultiplexers 91 and 92, the selection controller 84 of the optical network unit 52 controls the 2-1 selector 82 and routing section 83 in response to the PST message.

Here, since the K2 byte indicates "Selecting working side", the selection controller 84 outputs a command to switch the 2-1 selector 82 and routing section 83 to the working side. Subsequently, the traffic is transmitted and received via the working side.

The selection controller 84 of the optical network unit 52 transmits the PST message consisting of the K1 byte indicating "No switching request" and the K2 byte indicating "Selecting working side" to the optical line termination 51 at stage S23.

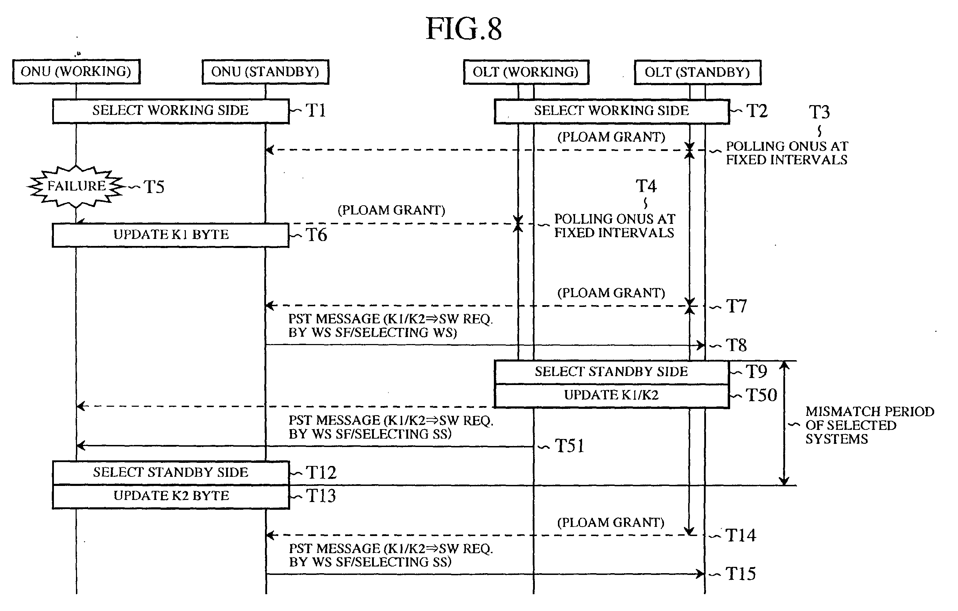

Fig. 8 is a sequence diagram illustrating a system switching at an equipment failure in the present embodiment 2. As clearly seen from this figure, the duration of a mismatch between selected systems becomes equal to that of the foregoing embodiment 1.

### EMBODIMENT 3

Although the optical line termination 51 always transmits the K1 byte indicating "No switching request", and the optical network unit 52 carries out the system switching in response to the K2 byte in the foregoing embodiments 1 and 2, this is not essential. For example, the optical line termination 51 can updates the K1 byte as needed, and the optical network unit 52 can carry out the system switching in response to the K1 and K2 bytes.

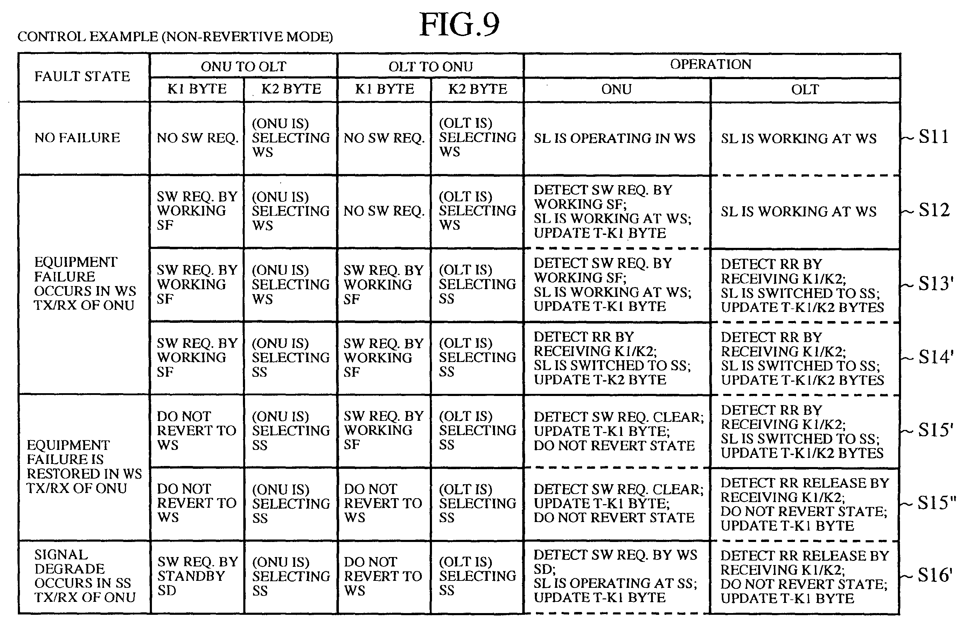

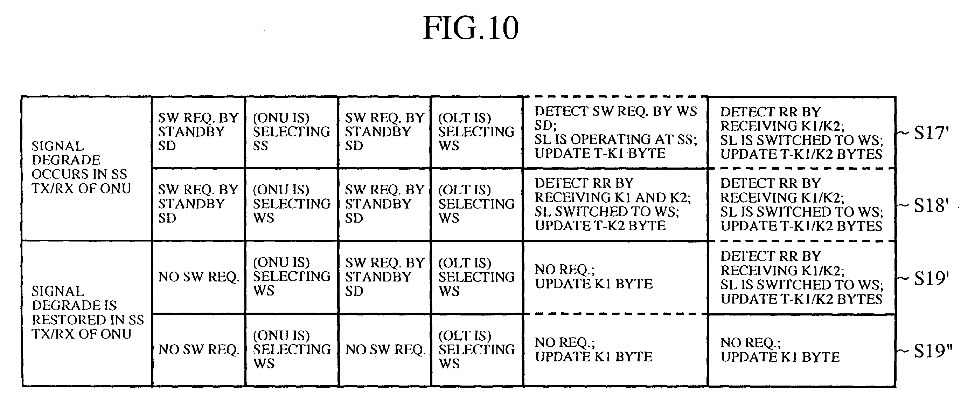

Figs. 9 and 10 are tables showing a control example carried out when an equipment failure is detected in the optical network unit 52 (non-revertive mode), which correspond to Figs. 3 and 4 of the foregoing embodiment 1.

Although the basic operation of the switching control is the same as that of the foregoing embodiment 1, the optical line termination 51 of the present embodiment 3 transmits the K1 byte indicating "Switching request due to working side SF" at stage S13' instead of the K1 byte indicating "No switching request" at stage 13 of Fig. 3, for example.

In addition, it can transmit the K1 byte indicating "No switching request" in place of the K1 byte indicating "Do not revert to working side" at stages S15" and S16' without causing any problem.

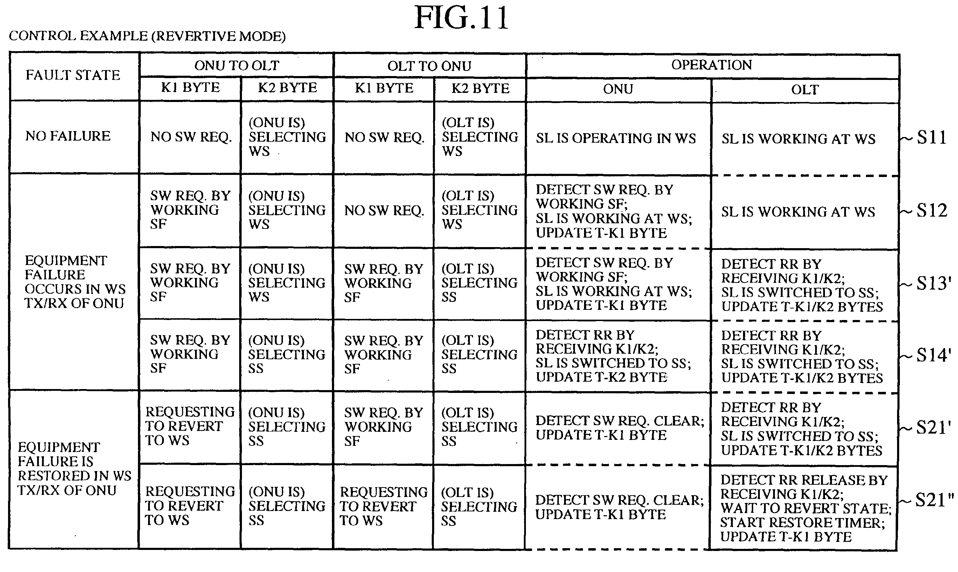

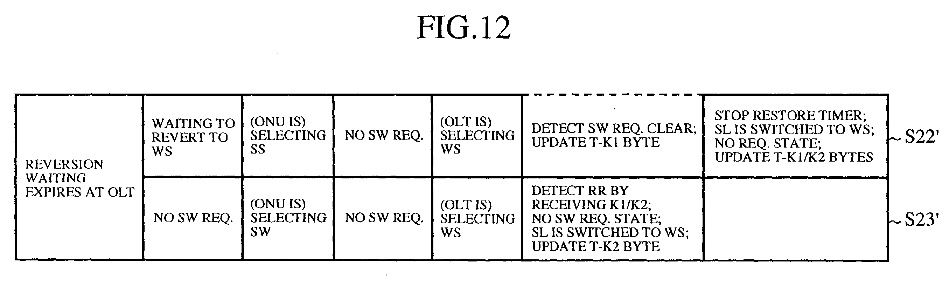

Figs. 11 and 12 are tables showing a control example carried out when an equipment failure is detected in the optical network unit 52 (revertive mode), which correspond to Fig. 7 of the foregoing embodiment 2.

Although the basic operation of the switching control is the same as that of the foregoing embodiment 2, the optical line termination 51 of the present embodiment 3 transmits the K1 byte indicating "Switching request due to working side SF" at stage S13' instead of the K1 byte indicating "No switching request" at stage S13 of Fig. 7, for example.

### EMBODIMENT 4

Although the foregoing embodiments 1-3 transmit the PST message through the working side and standby side, it is not essential. For example, the PST message can be transmitted through a system that is not selected currently.

In addition, although the foregoing embodiments 1-3 are applied to the switching control of the (1:1) configuration, they are also applicable to the switching control of a (1+1) configuration or (1:n) configuration.

Here, the (1:1) configuration refers to a configuration that assigns one dedicated standby side to each working side, and the standby side transmits the traffic only when the working side has a failure, or the forced switching or manual switching operation is carried out. As for the PST message (K1 byte and K2 byte), however, since it is carried by the PLOAM cell, it can be transmitted and received via the working side and standby side. As the switching mode, both the revertive mode and non-revertive mode are applicable.

The (1+1) configuration refers to a configuration that assigns one dedicated standby side to each working side, and both the working side and standby side transmit the traffic simultaneously. The PST message can also be transmitted and received via the both sides. As for the switching mode, both the revertive mode and non-revertive mode are applicable.

The (1:n) configuration refers to a configuration that assigns one standby side to a plurality of working sides, and the standby side transmits the traffic only when one of the working sides has a failure, or the forced switching or manual switching operation is carried out. As for the PST message, however, since it is carried by the PLOAM cell, it can be transmitted and received via the working side and standby side. As for the switching mode, the revertive mode is used basically.

Furthermore, although the foregoing embodiments 1-3 employ the K1/K2 bytes defined by ITU-T Recommendation I.630, the K1/K2 bytes defined by ITU-T Recommendation G.783 can also be used.

### EMBODIMENT 5

Although the foregoing embodiments 1-4 control the 2-1 selector 82 and routing section 83 of the optical network unit 52 simultaneously, and control the 2-1 selector 71 and routing section 72 of the optical line termination 51 simultaneously, they can be controlled independently.

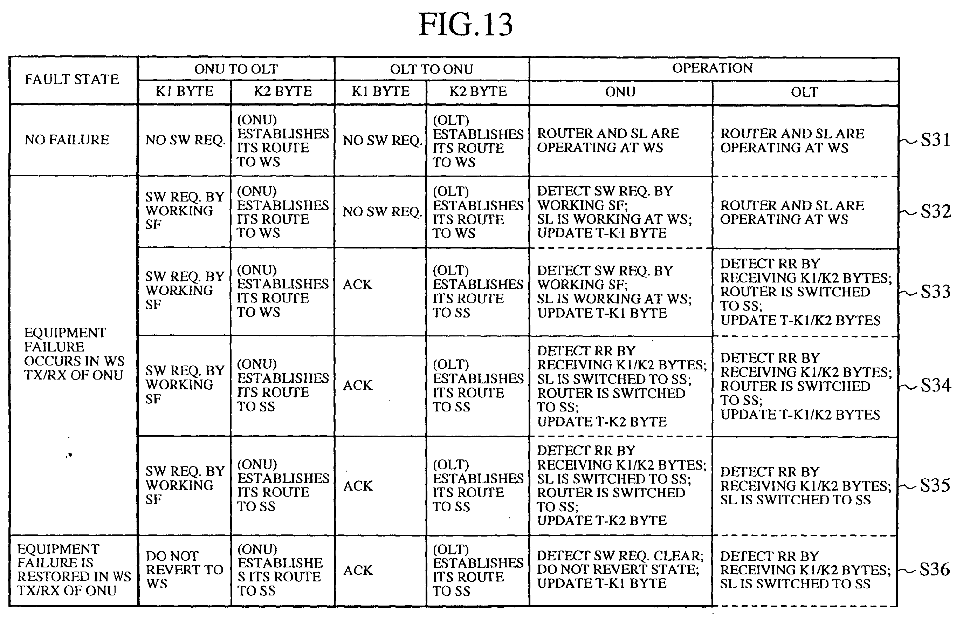

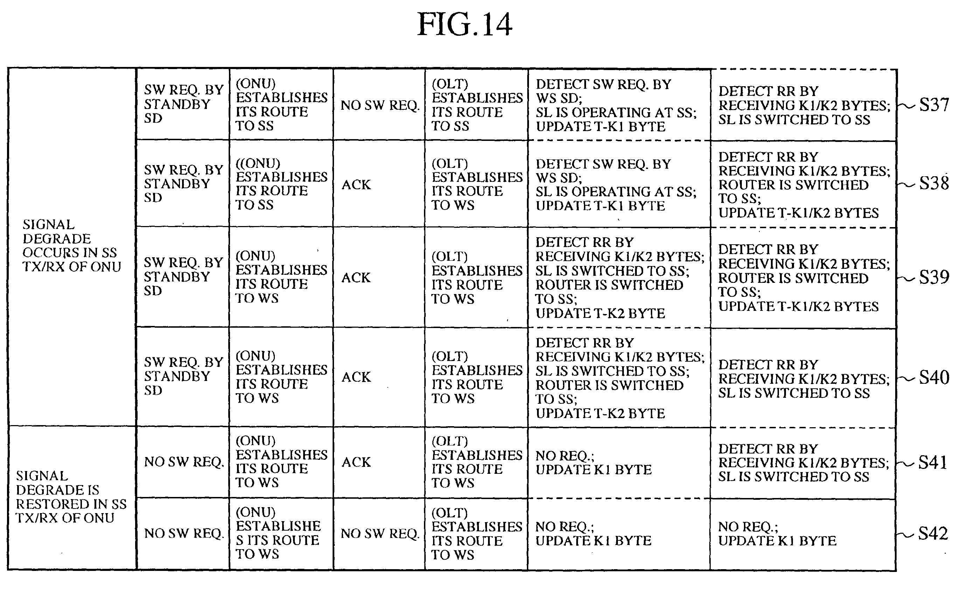

Figs. 13 and 14 are tables showing a control example (non-revertive mode) when an equipment failure is detected in the optical network unit 52, which corresponds to Figs. 3 and 4 of the foregoing embodiment 1. It will be described in more detail.

First, at stage S31, the 2-1 selector 82 and routing section 83 of the optical network unit 52, and the 2-1 selector 71 and routing section 72 of the optical line termination 51 operate on the working side.

If an equipment failure happens in the working side TX/RX section 89 in the optical network unit 52, the selection controller 73 of the optical line termination 51 controls only the routing section 72, first, and transmits the K1 byte indicating "Acknowledgement" from the optical line termination 51 to the optical network unit 52 (S32 - S33).

Next, the selection controller 84 of the optical network unit 52 controls the 2-1 selector 82 and routing section 83 (S34), and finally the selection controller 73 of the optical line termination 51 controls the 2-1 selector 71 (S35).

When the equipment failure is restored in the working side TX/RX section 89 of the optical network unit 52 (S36), although the operation similar to that of stage S15 of Fig. 3 is carried out, the optical line termination 51 maintains the state after having transmitted the K1 byte indicating "Acknowledgement" instead of "No switching request" to the optical network unit 52.

In addition, at stages S33-S36 and S38-S41, the optical line termination 51 also transmits the K1 byte indicating "Acknowledgement" instead of "No switching request" to the optical network unit 52.

If a signal degrade occurs in the standby side TX/RX section 90 of the optical network unit 52, the selection controller 73 of the optical line termination 51 also controls only the routing section 72, first, and the optical line termination 51 transmits the K1 byte indicating "Acknowledgement" to the optical network unit 52 (S37-S38).

Subsequently, the selection controller 84 of the optical network unit 52 controls the 2-1 selector 82 and routing section 83 (S39), and finally, the selection controller 73 of the optical line termination 51 controls the 2-1 selector 71 (S40).

When the signal degrade is restored in the standby side TX/RX section 90 (S41-S42), the selection controller 73 in the optical network unit 52 operates similarly to S19 of Fig. 4: The optical line termination 51 transmits the K1 byte indicating "No switching request" to the optical network unit 52.

In the foregoing stage 36, the optical network unit 52 can transmit the K1 byte indicating "No switching request" or "Request to revert back to working side" instead of "Do not revert to working side" to the optical line termination 51 without providing any problem about the control.

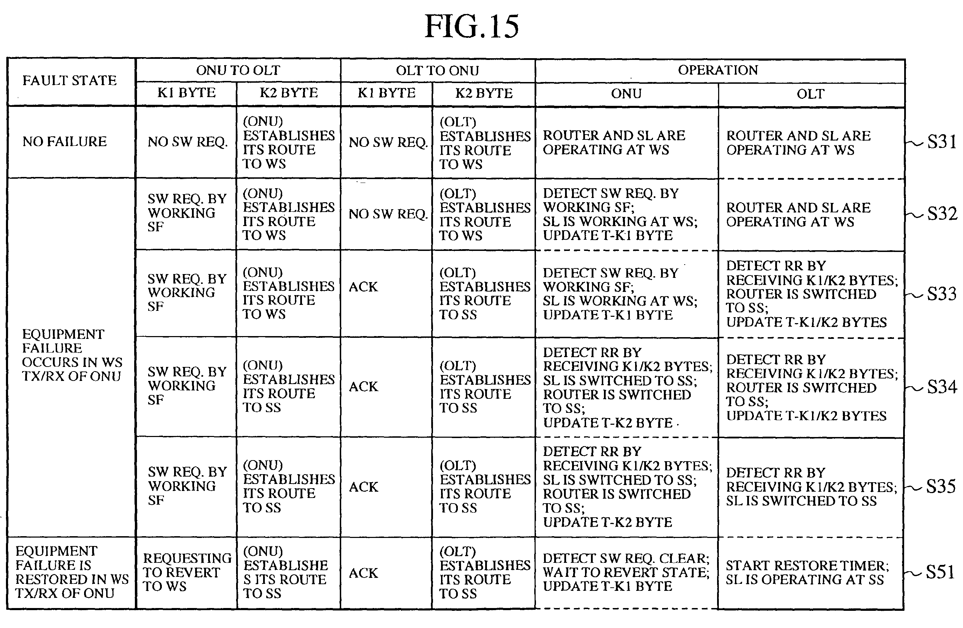

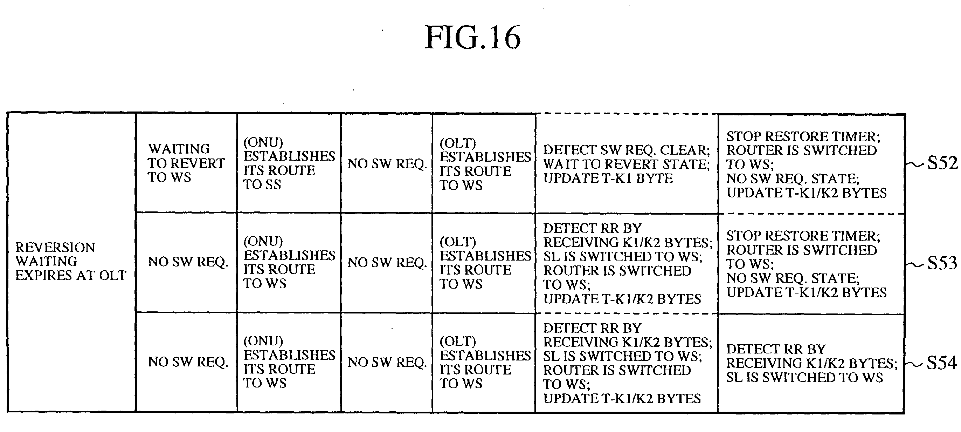

Figs. 15 and 16 are tables showing a control example (revertive mode) when an equipment failure is detected in the optical network unit 52, which corresponds to Fig. 7 in the foregoing embodiment 2.

It will be described in more detail except for stages S31-S35 which are identical to those of Fig. 13.

When the equipment failure is restored in the working side TX/RX section 89 of the optical network unit 52 (S51), although the operation similar to that of stage S21 of Fig. 7 is carried out, the optical line termination 51 maintains the state after having transmitted the K1 byte indicating "Acknowledgement" instead of "No switching request" to the optical network unit 52.

Besides, when a "wait to restore" timer has expired in the optical line termination 51, the selection controller 73 of the optical line termination 51 controls only the routing section 72, first, and the optical line termination 51 transmits the K1 byte indicating "No switching request" to the optical network unit 52 (S52).

Subsequently, the selection controller 84 of the optical network unit 52 controls the 2-1 selector 82 and routing section 83 (S53), and finally, the selection controller 73 of the optical line termination 51 controls the 2-1 selector 71 (S54).

In the foregoing stages S51-S52, the optical network unit 52 can transmit the K1 byte indicating "No switching request" instead of "Request to revert back to working side" to the optical line termination 51 without providing any problem about the control.

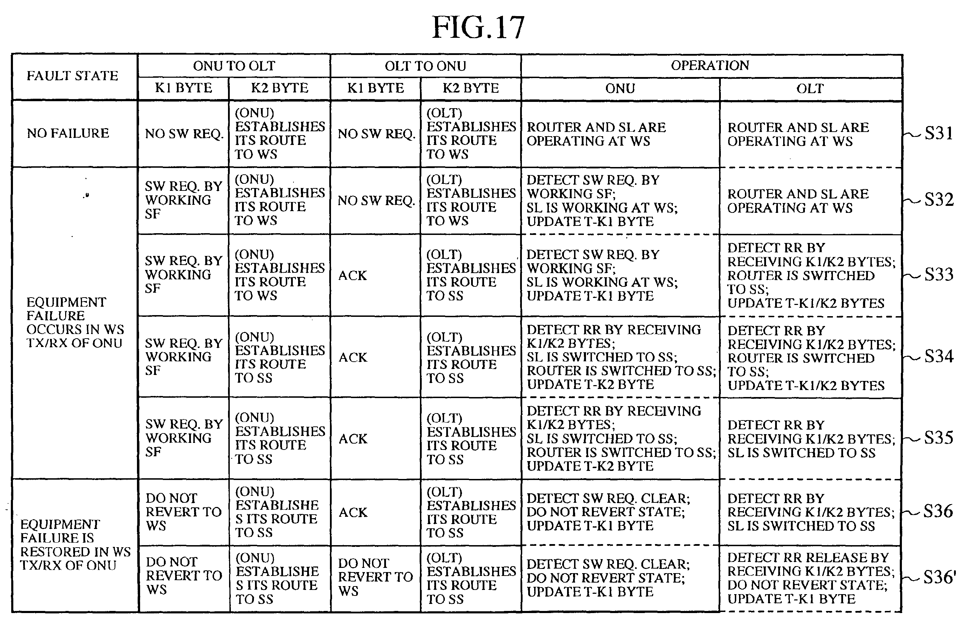

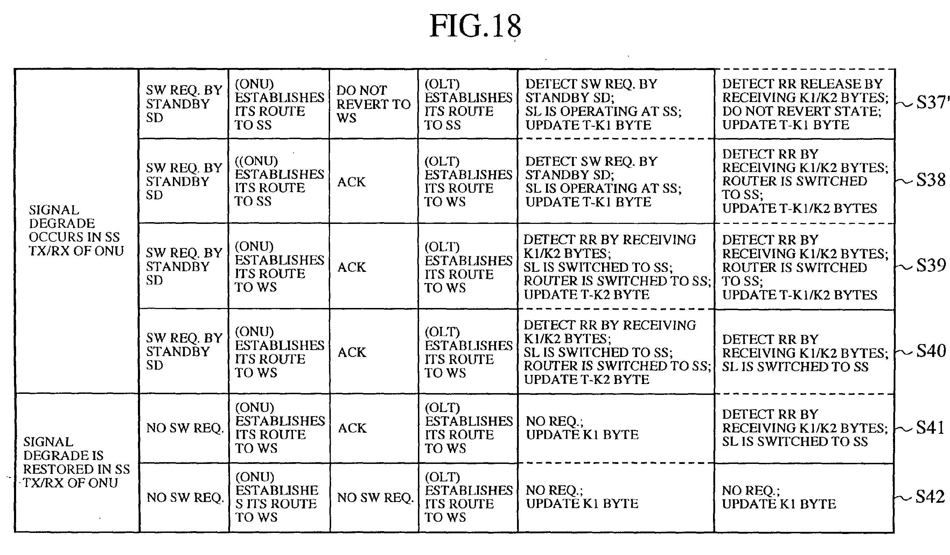

Figs. 17 and 18 are tables showing a control example (non-revertive mode) when an equipment failure is detected in the optical network unit 52, which corresponds to Figs. 9 and 10 in the foregoing embodiment 3.

Although the basic operation of the switching control is the same as that of Figs. 13 and 14, the optical line termination 51 transmits at stages S36'-S37' the K1 byte indicating "Do not revert to working side" instead of "Acknowledgement" to the optical network unit 52.

In addition, at the stages S36-S36', the optical network unit 52 can transmit the K1 byte indicating "No switching request" or "Request to revert back to working side" instead of "Do not revert to working side" to the optical line termination 51 without providing any problem with the control.

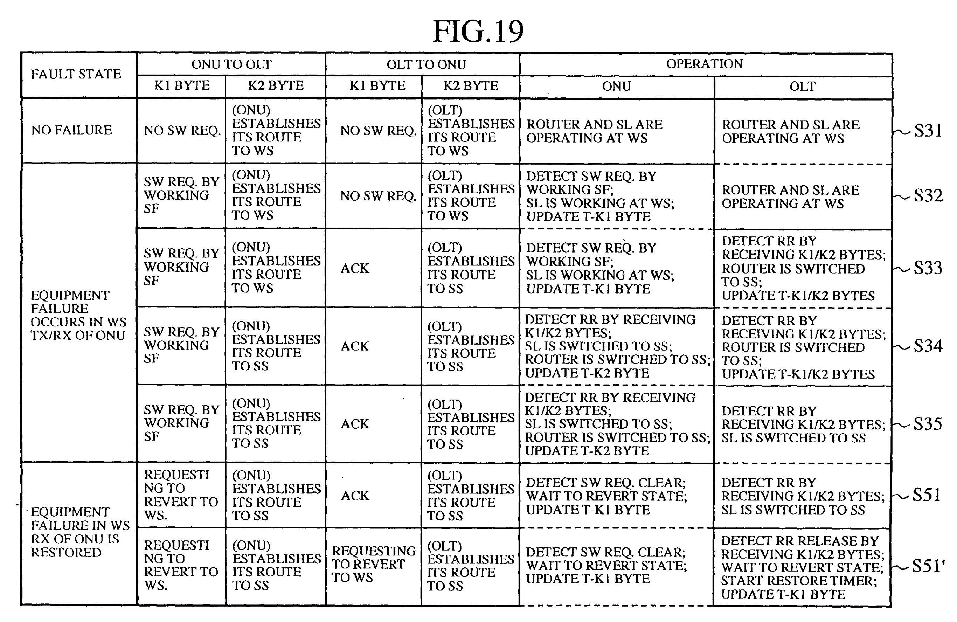

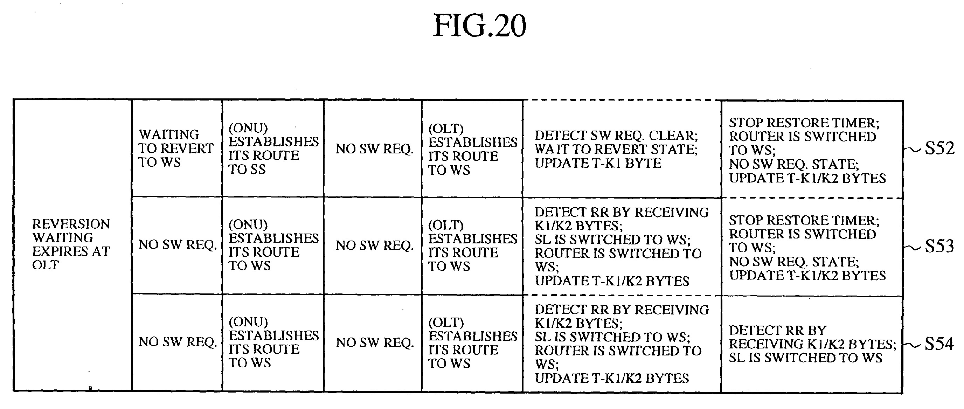

Figs. 19 and 20 are tables showing a control example (revertive mode) when an equipment failure is detected in the optical network unit 52, which corresponds to Figs. 11 and 12 in the foregoing embodiment 3.

Although the basic operation of the switching control is the same as that of Figs. 15 and 16, the optical line termination 51 transmits at stages S51' the K1 byte indicating "Request to revert back to working side" instead of "Acknowledgement" to the optical network unit 52.

In addition, at the stages S51-S52, the optical network unit 52 can transmit the K1 byte indicating "No switching request" instead of "Request to revert back to working side" to the optical line termination 51 without providing any problem with the control.

### EMBODIMENT 6

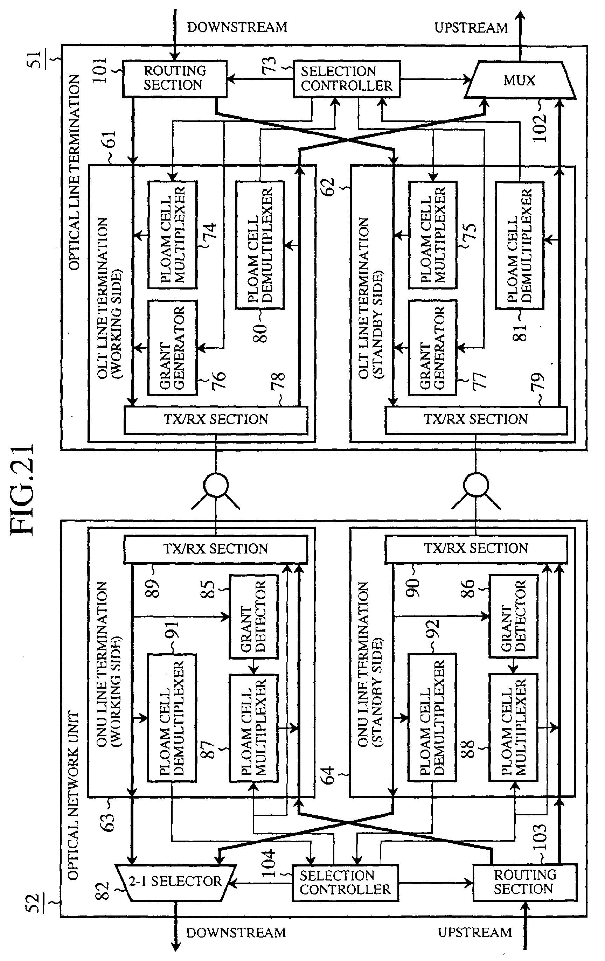

Fig. 21 is a block diagram showing a detailed configuration of an embodiment 6 of the optical distribution network system in accordance with the present invention. In this figure, the same reference numerals designate the same or like portions to those of Fig. 2, and hence the description thereof is omitted here.

In Fig. 21, the reference numeral 101 designates a routing section for copying the traffic (downstream messages) to the working side line termination section of the OLT 61 and standby side line termination section of the OLT 62; and 102 designates a multiplexer (MUX) for multiplexing the traffic (upstream messages) supplied from the working side line termination section of the OLT 61 and standby side line termination section of the OLT 62.

The reference numeral 103 designates a routing section for copying the traffic (upstream messages) to the working side line termination section of the ONU 63 and standby side line termination section of the ONU 64; and 104 designates a selection controller for bringing upstream messages to be transmitted from the TX/RX section 89 or 90 into a transmit stop state in accordance with the PLOAM grant generated by the grant generator 76 or 77 of the optical line termination 51.

Next, the operation of the present embodiment 6 will be described.

The basic operation of the present embodiment 6 is the same as that of the foregoing embodiment 1 except that the routing sections 101 and 103 each copy the messages rather than supply them to one of the two line terminations.

In the foregoing embodiment 1, when the routing section 72 or 83 outputs the messages to one of the line terminations, they establish the route by rewriting a table (not shown) indicating the route. The table rewriting, however, takes about 100 msec, thereby prolonging the switching of the system.

To shorten the system switching time, the routing sections 101 and 103 of the present embodiment 6 always copy the messages, thus obviating the need for rewriting the table.

Receiving the downstream message copied by the routing section 101 of the optical line termination 51, the working side line termination section of the OLT 61 and standby side line termination section of the OLT 62 copy downstream messages to the working side line termination section of the ONU 63 and standby side line termination section of the ONU 64.

When the working side line termination section of the ONU 63 and standby side line termination section of the ONU 64 receive the downstream messages, the 2-1 selector 82 of the optical network unit 52 selects and outputs one of the downstream messages in response to the PST message consisting of the K1 byte and K2 byte.

On the other hand, when the routing section 103 of the optical network unit 52 copies the upstream message, the selection controller 104 of the optical network unit 52 controls the TX/RX sections 89 and 90 with referring to the PLOAM grants, which are generated by the grant generators 76 and 77 of the optical line termination 51, and are transmitted along with the downstream message, thereby bringing the upstream message to be transmitted by the TX/RX section 89 or by the TX/RX section 90 into the transmit stop state.

For example, when the PLOAM grants indicate to disable the output of the standby side because the working side is selected at present, the selection controller 104 brings the upstream message to be transmitted from the standby side TX/RX section 90 into the transmit stop state. On the contrary, when the PLOAM grants indicate to disable the output of the working side because the standby side is selected at present, the selection controller 104 brings the upstream message to be transmitted from the working side TX/RX section 89 into the transmit stop state.

Thus, when the working side is being selected, only the upstream message received by the working side line termination section of the OLT 61 is output through the MUX 102.

In contrast, when the standby side is being selected, only the upstream message received by the standby side line termination section of the OLT 62 is output through the MUX 102.

As described above, the present embodiment 6 can obviate the need for the routing sections 101 and 103 to rewrite the table even if the system switching is carried out. As a result, the present embodiment 6 offers an advantage of being able to reduce the system switching time.

### EMBODIMENT 7

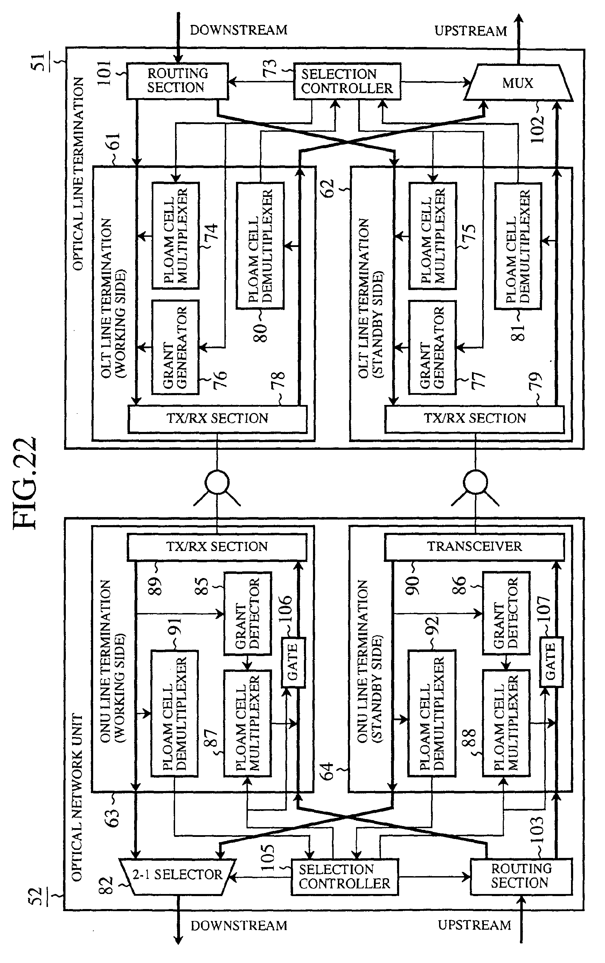

Fig. 22 is a block diagram showing a detailed configuration of an embodiment 7 of the optical distribution network system in accordance with the present invention. In this figure, the same reference numerals designate the same or like portions to those of Fig. 21, and hence the description thereof is omitted here.

In Fig. 22, the reference numeral 105 designates a selection controller for carrying out the ON/OFF operation of gates 106 and 107; 106 designates the gate for blocking the upstream message from the routing section 103 in response to the OFF command supplied from the selection controller 105; and 107 designates the gate for blocking the upstream message from the routing section 103 in response to the OFF command supplied from the selection controller 105.

Next, the operation of the present embodiment 7 will be described.

Although the selection controller 104 in the foregoing embodiment 6 controls the TX/RX sections 89 and 90 such that it brings the upstream message to be transmitted from the TX/RX section 89 or 90 into the transmit stop state, the selection controller 105 in the present embodiment 7 carries out the ON/OFF operation of the gates 106 and 107 in response to the PST message consisting of the K1 byte and K2 byte such that it enables the TX/RX section 89 or 90 to transmit the upstream message.

### EMBODIMENT 8

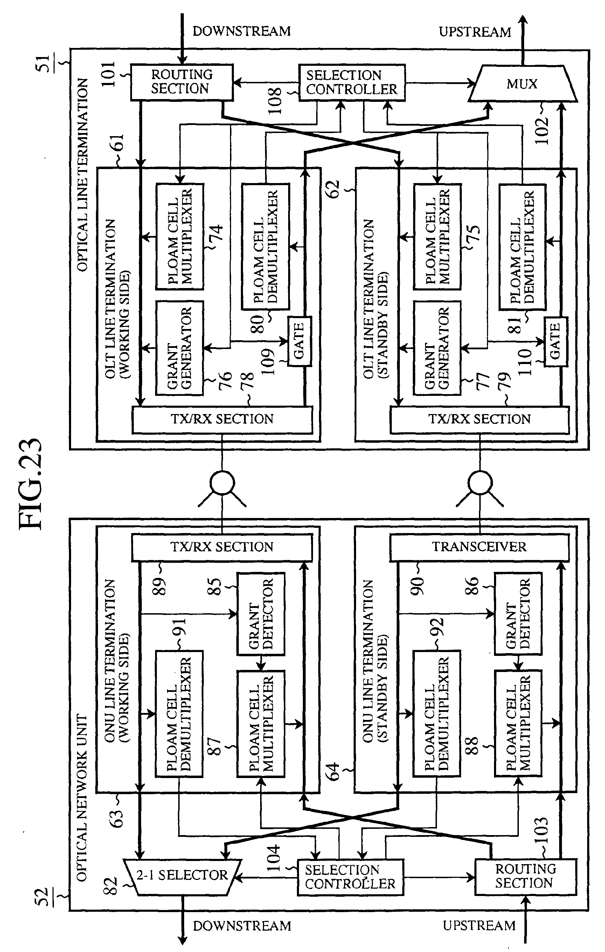

Fig. 23 is a block diagram showing a detailed configuration of an embodiment 8 of the optical distribution network system in accordance with the present invention. In this figure, the same reference numerals designate the same or like portions to those of Fig. 21, and hence the description thereof is omitted here.

In Fig. 23, the reference numeral 108 designates a selection controller for carrying out the ON/OFF operation of gates 109 and 110; 109 designates the gate for blocking the upstream message fed from the TX/RX section 78 in response to the OFF command supplied from the selection controller 108; and 110 designates the gate for blocking the upstream message fed from the TX/RX section 79 in response to the OFF command supplied from the selection controller 108.

Next, the operation of the present embodiment 8 will be described.

Although the selection controller 104 in the foregoing embodiment 6 controls the TX/RX sections 89 and 90 such that it brings the upstream message to be transmitted from the TX/RX section 89 or 90 into the transmit stop state, the selection controller 108 in the present embodiment 8 carries out the ON/OFF operation of the gates 109 and 110 such that it enables only the message received by the TX/RX section 78 or 79 to be transmit from the MUX 102.

### EMBODIMENT 9

The foregoing embodiments 6-8 carry out the system switching by controlling the TX/RX sections 89 and 90, the gates 106 and 107, or the gates 109 and 110. In this case, when the working side is switched to the standby side, it is not unlikely that the upstream message received by the standby side TX/RX section 79 of the optical line termination 51 is supplied to the MUX 102 before the entire upstream message, which is received by the working side TX/RX section 78 before the switching, has been supplied to the MUX 102.

This will cause a problem of collision of the working side upstream message and the standby side upstream message in the MUX 102.

In view of this, the present embodiment 9 prevents the message of the newly selected system from being output until a predetermined time has elapsed after the system switching.

For example, when the working side is switched to the standby side, the selection controller 108 of the optical line termination 51 controls the TX/RX section 79 or the gate 110 until the predetermined time has elapsed after the completion of the system switching, thereby preventing the upstream message, which is received by the standby side TX/RX section 79, to be supplied to the MUX 102.

Thus, the present embodiment 9 can prevent the collision of the working side upstream message and the standby side upstream message.

Since the predetermined time of an order of a few hundred microseconds is enough for the operation, it presents no problem in reducing the system switching time. By way of comparison, it takes about one hundred milliseconds for the routing sections 72 and 83 to rewrite the table in the foregoing embodiment 1.

## Claims

1. An optical distribution network system comprising:
an optical line termination (51);
a plurality of optical network units (52), each of which is connected to said optical line termination through at least one of a first optical network and a second optical network;
monitoring means (61, 62) installed in said optical line termination for detecting a system switching request from each of said plurality of optical network units; and
control means (73) installed in said optical line termination for controlling system switching between a working side and a standby side of each of said plurality of optical network units.

2. The optical distribution network system according to claim 1, wherein said control means employs a tree switching method that carries out the system switching between the working side and the standby side of all of said plurality of optical network units at once, when carrying out the system switching of any one of said plurality of optical network units.

3. The optical distribution network system according to claim 1, wherein said control means employs a branch switching method that carries out the system switching between the working side and the standby side of only one of said plurality of optical network units, when carrying out the system switching.

4. The optical distribution network system according to claim 2, wherein when said monitoring means detects a system switching request sent from at least one of said plurality of optical network units, said control means makes a decision as to whether to carry out the system switching considering failure conditions of all of said plurality of optical network units.

5. The optical distribution network system according to claim 4, wherein when carrying out the system switching of the working side of all of said plurality of optical network units to their standby side, said control means performs switching control only when a number of failed units on the standby side is less than a number of failed units on the working side.

6. The optical distribution network system according to claim 4, wherein when carrying out the system switching of the standby side of all of said plurality of optical network units to their working side, said control means performs switching control only when a number of failed units on the working side is less than a number of failed units on the standby side.

7. The optical distribution network system according to any one of claims 1-6, wherein each of said plurality of optical network units further comprises switching means for carrying out the system switching between the working side and the standby side when it receives a system switching command from said optical line termination.

8. The optical distribution network system according to any one of claims 1-7, wherein said control means carries out the system switching only when a system switching request from one of said plurality of optical network units continues for more than a predetermined time period.

9. The optical distribution network system according to any one of claims 1-8, wherein said control means carries out its switching control in a duplex optical distribution network system on a passive optical network system.

10. The optical distribution network system according to any one of claims 1-9, wherein said optical line termination further comprises output selecting means (108-110) for outputting one of upstream messages that are copied via the working side and the standby side by at least one of said plurality of optical network units, and wherein at least one of said plurality of optical network units further comprises output selecting means (105-107) for outputting one of downstream messages that are copied via the working side and the standby side by said optical line termination.

11. The optical distribution network system according to claim 10, wherein at least one of said plurality of optical network units comprises transmission stop means (104) for halting transmission of one of the upstream messages to be copied to the working side and standby side of said optical line termination.

12. The optical distribution network system according to claim 10, wherein at least one of said plurality of optical network units comprises a gate (106 or 107) for preventing one of the messages to be copied from being copied by suppressing it.

13. The optical distribution network system according to claim 10, wherein the optical line termination comprises a gate (109 or 110) for preventing one of the messages to be copied from being copied by suppressing it.

14. The optical distribution network system according to claim 10, wherein said control means prevents the message of the selected side from being output until a predetermined time has elapsed after the system switching.
